Europäisches Patentamt

European Patent Office

Office européen des brevets

(19)

(11)  EP 0 814 347 B1

(12)  **FASCICULE DE BREVET EUROPEEN**

(45) Date de publication et mention
de la délivrance du brevet:
**28.08.2002  Bulletin 2002/35**

(51) Int Cl.$^7$: **G01S 7/40**, G01S 13/60

(21) Numéro de dépôt: **97401445.8**

(22) Date de dépôt: **20.06.1997**

(54) **Procédé de calibration des erreurs de positionnement d'un radar et de la dérive en vitesse sol d'une centrale inertielle embarqués à bord d'un aéronef**

Verfahren zum Kalibrieren des Positionsfehlers eines Radars und der Bodengeschwindigkeits-Drift eines Inertialsystems, das auf einem Flugzeug installiert ist

Method for calibrating the positioning error of a radar and the ground velocity drift of an inertial system installed on board of an aircraft

(84) Etats contractants désignés:
**DE FR GB IT**

(30) Priorité:  **21.06.1996  FR 9607754**

(43) Date de publication de la demande:
**29.12.1997  Bulletin 1997/52**

(73) Titulaire: **Thales**
**75008 Paris (FR)**

(72) Inventeurs:
• **Chamouard, Eric**
**94117 Arcueil Cedex (FR)**
• **Fronteau, Boris**
**94117 Arcueil Cedex (FR)**
• **Monod, Brice**
**94117 Arcueil Cedex (FR)**

(74) Mandataire: **Beylot, Jacques**
**Thomson-CSF Propriété Intellectuelle,**
**13, Avenue du Président Salvador Allende**
**94117 Arcueil Cédex (FR)**

(56) Documents cités:
**GB-A- 2 244 405          US-A- 5 225 839**

• **MOLNAR D O ET AL: "B-1B DOPPLER ERROR COMPENSATION BASED ON FLITGHT DATA ANALYSIS" PROCEEDINGS OF THE NATIONAL AEROSPACE AND ELECTRONICS CONFERENCE (NAECON), DAYTON, MAY 22 - 26, 1989, vol. 4 OF 4, 22 mai 1989, INSTITUTE OF ELECTRICAL AND ELECTRONICS ENGINEERS, pages 1753-1757, XP000076525**

## Description

La présente invention concerne l'estimation des erreurs de positionnement d'un radar de pointe avant et de la dérive en vitesse sol d'une centrale inertielle équipant un aéronef.

Le calage d'une centrale inertielle par rapport à un radar est un problème critique. En effet, aux erreurs propres du radar dans son repère s'ajoutent les erreurs de la transformation de ces mesures dans le repère de la centrale inertielle, ce qui est particulièrement critique pour les mesures angulaires du radar.

Pour minimiser les erreurs de positionnement entre le radar et la centrale inertielle d'un aéronef on utilise habituellement une procédure de calibration au sol dite harmonisation qui s'effectue à partir de mires et d'un système de visée optique et qui consiste à caler la centrale inertielle et le radar le plus précisément possible par rapport à un trièdre de référence lié à l'aéronef.

Cette procédure d'harmonisation est longue et délicate à mettre en oeuvre. En outre, elle ne prend pas en compte les déformations de la structure de l'aéronef en vol.

La correction de la dérive en vitesse sol de la centrale inertielle se fait en ayant recours à un autre dispositif de mesure de vitesse sol, par exemple un radar, ou par un recalage périodique par comparaison entre la position estimée par la centrale inertielle et la position vraie déduite du passage de l'aéronef au droit de points de référence dont les coordonnées sont connues avec précision ou à partir d'un autre système de repérage tel qu'un système de navigation par satellites.

Un exemple de ce qui se pratique dans la technique antérieure est illustré par la demande de brevet britannique GB 2 244 405 qui décrit un procédé de mesure de vitesse d'un aéronef à l'aide des voies écartométries d'un radar monopulse en vue d'une correction de la dérive en vitesse sol d'une centrale inertielle. Ce procédé a l'inconvénient de faire intervenir le pointage (azimut et élévation du radar) et de ne pas prendre en compte les erreurs de positionnement entre le radar et la centrale inertielle.

Un autre exemple est illustré par le brevet américain US 5,225,839 qui décrit un système de guidage de missiles air-sol au moyen d'un radar SAR et d'une centrale inertielle avec une mesure de vitesse sol par radar, sa comparaison avec la vitesse sol prédite par la centrale inertielle et son utilisation pour corriger la dérive de la centrale inertielle. Ici encore, les erreurs de positionnement entre le radar et la centrale inertielle ne sont pas prises en compte.

La présente invention a pour but une calibration des erreurs de positionnement entre un radar et une centrale inertielle, ainsi que de la dérive en vitesse sol de la centrale inertielle basée sur des comparaisons entre la vitesse sol estimée par la centrale à inertie et la vitesse sol estimée par le radar dans différentes orientations de vol.

Elle a également pour but une calibration des erreurs de positionnement entre un radar et une centrale inertielle qui ne nécessite pas de visée optique comme une procédure d'harmonisation au sol et qui soit facile à mettre en oeuvre en début de mission.

Elle a pour objet un procédé de calibration des erreurs de positionnement d'un radar et de la dérive en vitesse sol d'une centrale inertielle embarqués à bord d'un aéronef remarquable en ce qu'il consiste à faire estimer la vitesse sol de l'aéronef par la centrale inertielle $\vec{V}_{centrale}$ et par le radar $\vec{V}_{radar}$ dans au moins deux orientations de vol différant entre elles par un changement de cap et d'assiette et à utiliser ces estimations pour déterminer la dérive en vitesse $\vec{B}$ et une matrice de rotation R correspondant aux erreurs de positionnement du radar par rapport à la centrale inertielle, à partir de la relation matricielle :

$$\vec{V}_{centrale} = R\vec{V}_{radar} + \vec{B}$$

appliquée pour chacune des orientations de vol, les vecteurs vitesse sol et la dérive en vitesse sol étant exprimés par leurs composantes en x, y et z dans un référentiel lié à l'aéronef et la matrice de rotation R étant définie à partir des angles d'erreur de positionnement en lacet $\phi$, en assiette $\theta$ et en gîte $\psi$ par rapport à ce référentiel, par la relation :

$$R = \begin{pmatrix} 1 & -\phi & -\theta \\ \phi & 1 & -\psi \\ \theta & \psi & 1 \end{pmatrix}$$

Avantageusement, on peut faire plusieurs déterminations successives de la dérive en vitesse sol de la centrale inertielle et des erreurs de positionnement du radar par rapport à la centrale inertielle en effectuant des manoeuvres successives avec l'aéronef et faire la moyenne des déterminations obtenues en tenant éventuellement compte de la fiabilité des estimations de vitesse délivrées, lorsqu'une telle fiabilité est connue à partir des bruits de mesure constatés.

D'autres caractéristiques et avantages de l'invention ressortiront de la description ci-après d'un mode de réalisation donné à titre d'exemple. Cette description sera faite en regard du dessin dans lequel :

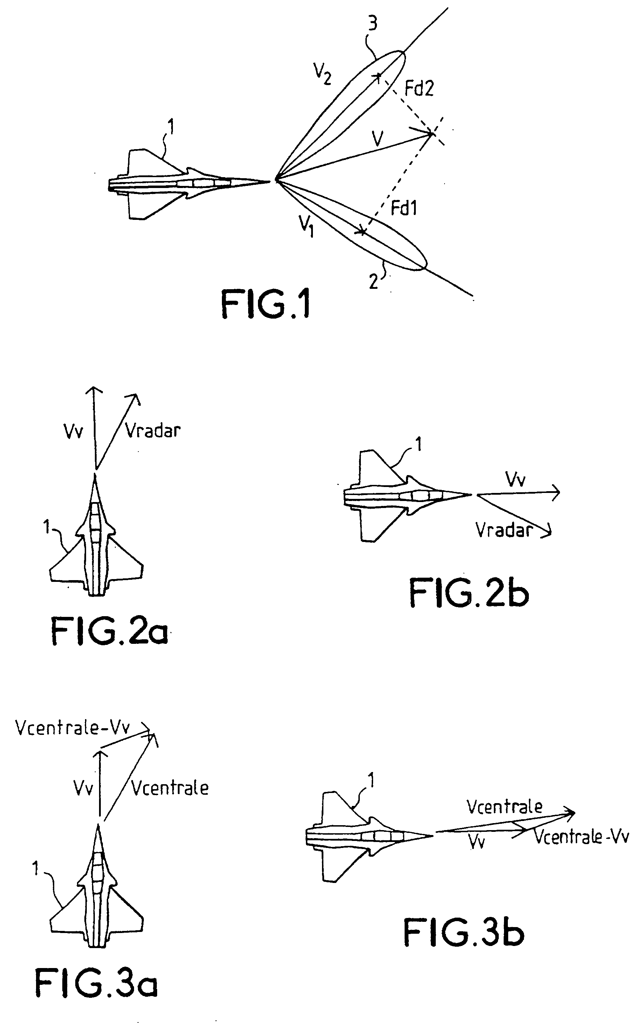

- une figure 1 illustre la façon d'estimer la vitesse sol d'un aéronef à partir d'un radar embarqué à bord,
- des figures 2a et 2b montrent le comportement de l'erreur faite sur l'estimation de la vitesse sol par le radar d'un aéronef lorsque ce dernier change d'orientation de vol, et
- des figures 3a et 3b montrent le comportement de l'erreur faite sur l'estimation de la vitesse sol par la centrale inertielle d'un aéronef lorsque ce dernier change d'orientation de vol.

Le radar d'un aéronef, en mode de détermination du vecteur vitesse sol, effectue des visées du sol à faible incidence, de part et d'autre de l'aéronef, déduit les composantes de la vitesse sol dans les directions visées, des variations de fréquence Doppler affectant le fouillis de sol et reconstruit le vecteur vitesse sol à partir de ses composantes mesurées dans les directions visées. Le fait d'utiliser plusieurs visées dans des directions différentes au lieu d'une seule dans l'axe longitudinal de l'aéronef, permet de s'affranchir de la dérive de cap due à un éventuel vent de travers.

La figure 1 illustre le principe de la mesure du vecteur vitesse sol par un radar embarqué à bord d'un aéronef. Le radar placé en pointe avant de l'aéronef 1 effectue deux visées latérales du sol, à faible incidence. Au cours de la première visée, qui a lieu, par exemple du côté droit de l'aéronef 1, sous un azimut $-\alpha_1$, le faisceau 2 du radar illumine une portion du sol qui retourne un écho affecté d'une variation de fréquence Doppler $F_{d1}$ liée à la composante $V_1$ de la vitesse sol dans la direction visée par la relation bien connue :

$$V_{1\,radar} = \frac{\lambda F_{d1}}{2}$$

où $\lambda$ est la longueur d'onde de l'onde émise par le radar. Au cours de la deuxième visée qui a lieu du côté gauche de l'aéronef 1, sous un azimut $\alpha_2$, le faisceau 3 du radar illumine une autre portion du sol qui retourne un écho affecté d'une variation de fréquence Doppler $F_{d2}$ liée à la composante $V_2$ de la vitesse sol dans la nouvelle direction visée par la relation :

$$V_{2\,radar} = \frac{\lambda F_{d2}}{2}$$

Une construction géométrique, simplifiée dans le cas où les azimuts $-\alpha_1$ et $\alpha_2$ sont pris égaux à $-\pi/4$ et $+\pi/4$, permet de déterminer le module et l'orientation du vecteur vitesse sol à partir de ses projections $V_1$ et $V_2$ dans les azimuts $-\alpha_1$ et $\alpha_2$. L'orientation du vecteur vitesse sol n'est pas obligatoirement confondue avec l'axe longitudinal de l'aéronef 1 car il peut y avoir, comme c'est le cas représenté à la figure 1, une dérive de cap due à un vent de travers.

Comme le montrent les figures 2a et 2b, s'il y a une erreur angulaire de calage du radar par rapport au référentiel lié à l'aéronef utilisé par la centrale inertielle qui fait que la vitesse sol estimée par le radar $V_{radar}$ n'a pas la même orientation que la vitesse sol vraie $V_v$, cette erreur angulaire de calage étant liée au référentiel aéronef, suit les évolutions de l'avion. Ainsi si, comme représenté, l'orientation de vol de l'aéronef 1 change de 90° entre les figures 2a et 2b, la vitesse sol estimée par le radar $V_{radar}$ et la vitesse sol vraie $V_v$ tournent également de 90° en conservant le même écart angulaire

La centrale inertielle de l'aéronef 1 fournit une vitesse sol, dans un repère référentiel lié à l'aéronef 1 généralement entachée d'une erreur ou biais que l'on appelle ici dérive en vitesse sol. Cette dérive est indépendante des évolutions de l'avion comme le montrent les figures 3a et 3b. Ainsi si, comme représenté, l'orientation de vol de l'aéronef 1 change de 90° entre les figures 3a et 3b, la vitesse sol vraie $V_v$ tourne de 90° mais ce n'est plus exactement le cas de la vitesse sol estimée par la centrale inertielle $V_{centrale}$ qui varie de manière à conserver inchangée la dérive en vitesse sol $V_{centrale}-V_v$.

Pour résumer, on constate que la différence entre la vitesse sol $\vec{V}_{radar}$ estimée par le radar et la vitesse sol $\vec{V}_{centrale}$ estimée par la centrale inertielle et exprimées l'une et l'autre dans un même repère lié à l'aéronef présente une composante due à la dérive de la centrale inertielle qui ne varie pas avec les changements de direction de la vitesse de l'aéronef au cours d'une manoeuvre assez brève et une composante due à l'erreur de calage du radar par rapport à la centrale inertielle qui suit les changements de direction de la vitesse de l'aéronef.

Si l'on fait abstraction des bruits de mesure, la relation entre la vitesse sol $\vec{V}_{radar}$ estimée par le radar et la

vitesse sol $\vec{V}_{centrale}$ estimée par la centrale inertielle peut s'exprimer sous la forme vectorielle :

$$\vec{V}_{centrale} = R\vec{V}_{radar} + \vec{B} \qquad (1)$$

R étant une matrice d'erreur de rotation qui caractérise le défaut de calage entre le radar et la centrale inertielle et $\vec{B}$ la dérive en vitesse de la centrale inertielle. Cette relation (1) exprime le fait que la vitesse sol estimée par le radar en mode de détermination de la vitesse diffère de la vitesse sol estimée par la centrale inertielle d'une part par la dérive en vitesse $\vec{B}$ de la centrale inertielle et d'autre part, par l'erreur de calage qui correspond à une erreur de changement de repère s'exprimant par la matrice de rotation R.

Soient $\phi$ l'erreur de calage en lacet, $\theta$ l'erreur de calage en assiette et $\psi$ l'erreur de calage en gîte du radar par rapport à la centrale inertielle. Comme ces erreurs sont petites, il est possible de linéariser la matrice de rotation R et de la mettre sous la forme

$$R = \begin{pmatrix} 1 & -\phi & -\theta \\ \phi & 1 & -\psi \\ \theta & \psi & 1 \end{pmatrix}$$

Si l'on exprime la vitesse sol $\vec{V}_{radar}$ estimée par le radar, la vitesse sol $\vec{V}_{centrale}$ estimée par la centrale inertielle et la dérive en vitesse sol $\vec{B}$ de la centrale inertielle en fonction de leurs composantes selon les axes x, y et z du trièdre de référence lié à l'aéronef utilisé par la centrale inertielle, la relation (1) devient :

$$\begin{pmatrix} V_{x\,centrale} \\ V_{y\,centrale} \\ V_{z\,centrale} \end{pmatrix} = \begin{pmatrix} 1 & -\phi & -\theta \\ \phi & 1 & -\psi \\ \theta & \psi & 1 \end{pmatrix} \times \begin{pmatrix} V_{x\,radar} \\ V_{y\,radar} \\ V_{z\,radar} \end{pmatrix} + \begin{pmatrix} B_x \\ B_y \\ B_z \end{pmatrix} \qquad (2)$$

Compte tenu du fait que l'aéronef ne vole jamais strictement avec une assiette horizontale, les composantes en z des vitesses sol estimées par le radar et la centrale inertielle ne sont pas nulles.

La relation (2) peut également se mettre sous la forme :

$$\begin{pmatrix} V_{x\,centrale} \\ V_{y\,centrale} \\ V_{z\,centrale} \end{pmatrix} = \begin{pmatrix} 1 & 0 & 0 & 0 & -V_{z\,radar} & V_{y\,radar} \\ 0 & 1 & 0 & V_{z\,radar} & 0 & -V_{x\,radar} \\ 0 & 0 & 1 & -V_{y\,radar} & V_{x\,radar} & 0 \end{pmatrix} \times \begin{pmatrix} B_x \\ B_y \\ B_z \\ \psi \\ \theta \\ \phi \end{pmatrix} + \begin{pmatrix} V_{x\,radar} \\ V_{y\,radar} \\ V_{z\,radar} \end{pmatrix}$$

qui montre qu'elle est équivalente à un système de trois équations linéaires à six inconnues. Deux équations matricielles de ce type liant des vecteurs vitesse sol estimés par le radar et la centrale inertielle dans des orientations de vol différant par un changement de cap et d'assiette permettent de déterminer les six inconnues. Cependant, pour atteindre une précision déterminée, il peut être nécessaire de réaliser plusieurs manoeuvres et d'intégrer de manière optimale les déterminations obtenues. Cette intégration peut consister en une moyenne des déterminations obtenues pondérée par le carré de l'écart type de l'erreur lorsque celui-ci est connu.

Pratiquement, une procédure de calibration comporte les étapes suivantes :

- activation du radar en mode de détermination de la vitesse sol et mémorisation de l'estimation du radar,
- mémorisation de la valeur de la vitesse sol estimée par la centrale inertielle en synchronisation avec le radar,
- réalisation d'une manoeuvre par l'aéronef,
- nouvelle activation du radar en mode de détermination de la vitesse sol et mémorisation du couple d'estimations de vitesse sol fourni par le radar et la centrale inertielle,
- détermination des erreurs de calage entre le radar et la centrale inertielle et de la dérive en vitesse sol de la centrale inertielle par la résolution du système d'équations linéaires provenant de la mise en oeuvre à deux reprises de la relation vectorielle (1), et
- en cas de précision insuffisante, réitération des étapes précédentes avec intégration des déterminations.

La précision finale est limitée par l'erreur ou biais faite par le radar sur la mesure de la vitesse sol dans le repère de son antenne. Elle est fonction des performances du mode d'estimation de la vitesse sol mis en oeuvre dans le radar.

Cependant, pour une vitesse sol de l'ordre de 200 m/s, un changement de cap de 45 degrés et une dérive en vitesse de la centrale de 0,1 m/s, il est possible d'obtenir un écart type d'estimation sur l'erreur de calage en lacet de l'ordre de 0,4 mrd, ce qui est un gain appréciable par rapport aux quelques milliradians de précision de calage obtenus au sol par les procédés classiques d'harmonisation.

Le procédé de calibration qui vient d'être décrit peut être étendu à la calibration des calages de la centrale inertielle avec tout dispositif embarqué à bord de l'aéronef dont le calage par rapport au radar peut être évalué, par exemple, les dispositifs d'imagerie dont les calages par rapport au radar peuvent être appréciés en comparant leurs images et celles du radar.

**Revendications**

**1.**  Procédé de calibration des erreurs de positionnement d'un radar et de la dérive en vitesse sol d'une centrale inertielle embarqués à bord d'un aéronef **caractérisé en ce qu'**il consiste à faire estimer la vitesse sol de l'aéronef par la centrale inertielle $\vec{V}_{centrale}$ et par le radar $\vec{V}_{radar}$ dans au moins deux orientations de vol différant entre elles par un changement de cap et d'assiette et à utiliser ces estimations pour déterminer la dérive en vitesse $\vec{B}$ et une matrice de rotation R correspondant aux erreurs de positionnement du radar par rapport à la centrale inertielle, à partir de la relation matricielle :

$$\vec{V}_{centrale} = R\vec{V}_{radar} + \vec{B}$$

appliquée pour chacune des orientations de vol, les vecteurs vitesse sol et la dérive en vitesse sol étant exprimés par leurs composantes en x, y et z dans un référentiel lié à l'aéronef et la matrice de rotation R étant définie à partir des angles d'erreur de positionnement en lacet $\phi$, en assiette $\theta$ et en gîte $\psi$ par la relation :

$$R = \begin{pmatrix} 1 & -\phi & -\theta \\ \phi & 1 & -\psi \\ \theta & \psi & 1 \end{pmatrix}$$

**2.**  Procédé selon la revendication 1, **caractérisé en ce qu'**il comporte les étapes suivantes

- activation du radar en mode de détermination de la vitesse sol et mémorisation de l'estimation $\vec{V}_{radar}$ du radar,
- mémorisation de la valeur de la vitesse sol $\vec{V}_{centrale}$ estimée par la centrale inertielle en synchronisation avec le radar,
- réalisation d'une manoeuvre par l'aéronef,
- nouvelle activation du radar en mode de détermination de la vitesse sol et mémorisation du nouveau couple d'estimations de vitesse sol $\vec{V}_{radar}$ et $\vec{V}_{centrale}$ fourni par le radar et la centrale inertielle, et
- détermination des erreurs de calage entre le radar et la centrale inertielle et de la dérive en vitesse sol $\vec{B}$ de la centrale inertielle par la résolution du système d'équations linéaires provenant de la mise en oeuvre à deux reprises de la relation vectorielle :

$$\vec{V}_{centrale} = R\vec{V}_{radar} + \vec{B}$$

R étant une matrice d'erreur de rotation qui **caractérise** le défaut de calage entre le radar et la centrale inertielle, définie à partir des angles d'erreur de positionnement en lacet $\phi$, en assiette $\theta$ et en gîte $\psi$ par la relation :

$$R = \begin{pmatrix} 1 & -\phi & -\theta \\ \phi & 1 & -\psi \\ \theta & \psi & 1 \end{pmatrix}$$

**3.** Procédé selon la revendication 2, **caractérisé en ce qu'**il est mis en oeuvre à plusieurs reprises successives et **en ce que** l'on fait une moyenne des diverses déterminations obtenues pour chaque erreur de calage du radar par rapport à la centrale inertielle et pour la dérive en vitesse sol de la centrale inertielle au cours des différentes reprises.

**4.** Procédé selon la revendication 2, **caractérisé en ce qu'**il est mis en oeuvre à plusieurs reprises successives et **en ce que** l'on fait une moyenne des diverses déterminations obtenues pour chaque erreur de calage du radar par rapport à la centrale inertielle et pour la dérive en vitesse sol de la centrale inertielle au cours des différentes reprises, pondérées par les carrés de leurs écarts types.

**Patentansprüche**

**1.** Verfahren zur Kalibrierung der Positionierfehler eines Radargeräts und der Abweichung der Geschwindigkeit über Grund einer Trägheitszentrale an Bord eines Flugzeugs, **dadurch gekennzeichnet, daß** es darin besteht, die Geschwindigkeit $V_{Zentrale}$ des Flugzeugs über Grund durch die Trägheitszentrale und die Geschwindigkeit $V_{radar}$ durch das Radargerät in mindestens zwei Fluglagen zu schätzen, die sich voneinander durch einen Kurswechsel und einen Wechsel der Trimmlage unterscheiden, und dann diese Schätzwerte für die Bestimmung der Geschwindigkeitsabweichung B sowie einer Rotationsmatrix R entsprechend den Positionierfehlern des Radargeräts bezüglich der Trägheitszentrale zu verwenden, ausgehend von der folgenden Matrixbeziehung:

$$V_{Zentrale} = R \cdot V_{radar} + B$$

in Anwendung auf jede der Fluglagen, wobei die Vektoren der Geschwindigkeit über Grund und die Abweichung hinsichtlich der Geschwindigkeit über Grund durch ihre Komponenten in x, y und z gemäß einem mit dem Flugzeug verknüpften Bezugssystem ausgedrückt werden, während die Rotationsmatrix R ausgehend von den Winkeln des Positionierfehlers in Gierrichtung $\phi$, in Trimmrichtung $\theta$ und in Lagerichtung $\Psi$ durch folgende Gleichung definiert ist:

$$R = \begin{pmatrix} 1 & -\phi & -\theta \\ \phi & 1 & -\psi \\ \theta & \psi & 1 \end{pmatrix}$$

**2.** Verfahren nach Anspruch 1, **dadurch gekennzeichnet, daß** es die folgenden Schritte enthält:

- Aktivierung des Radargeräts im Modus der Bestimmung der Geschwindigkeit über Grund und Speicherung des Schätzwerts $V_{radar}$ des Radargeräts,
- Speicherung des von der Trägheitszentrale synchron mit dem Radargerät geschätzten Werts der Geschwindigkeit $V_{Zentrale}$ über Grund,
- Durchführung eines Flugmanövers,

- erneute Aktivierung des Radargeräts im Modus der Bestimmung der Geschwindigkeit über Grund und Speicherung des neuen Paars von Geschwindigkeitsschätzwerten über Grund $V_{radar}$ und $V_{Zentrale}$, die vom Radargerät und von der Trägheitszentrale geliefert wurden,

- Bestimmung der Abstimmungsfehler zwischen dem Radargerät und der Trägheitszentrale sowie der Abweichung B der Geschwindigkeit über Grund gemäß der Trägheitszentrale durch die Auflösung des Systems linearer Gleichungen, das sich aus der zweimaligen Anwendung der Vektorbeziehung

$$V_{Zentrale} = R \cdot V_{radar} + B$$

ergibt, wobei R eine Rotationsfehlermatrix ist, die den Abstimmungsfehler zwischen dem Radargerät und der Trägheitszentrale kennzeichnet, der ausgehend von dem Positionierfehlwinkel in Gierrichtung $\phi$, in Trimmrichtung $\theta$ und in Lagerichtung $\psi$ durch folgende Beziehung definiert ist:

$$R = \begin{pmatrix} 1 & -\phi & -\theta \\ \phi & 1 & -\psi \\ \theta & \psi & 1 \end{pmatrix}$$

3. Verfahren nach Anspruch 2, **dadurch gekennzeichnet, daß** es mehrmals nacheinander durchgeführt wird und daß man einen Mittelwert der verschiedenen Bestimmungen für jeden Abstimmungsfehler des Radargeräts bezüglich der Trägheitszentrale und für die Abweichung der Geschwindigkeit über Grund der Trägheitszentrale während der verschiedenen Wiederholungen bildet.

4. Verfahren nach Anspruch 2, **dadurch gekennzeichnet, daß** es mehrmals nacheinander durchgeführt wird und daß man einen Mittelwert der verschiedenen Bestimmungen für jeden Abstimmungsfehler des Radargeräts bezüglich der Trägheitszentrale und für die Abweichung der Geschwindigkeit über Grund der Trägheitszentrale während der verschiedenen Wiederholungen bildet, die durch die Quadrate ihrer typischen Abweichungen gewichtet werden.

**Claims**

1. Method of calibration of the errors of positioning of a radar and of the ground speed drift of an inertial unit which are carried on board an aircraft, **characterized in that** it consists in using the inertial unit $\vec{V}_{unit}$ and the radar $\vec{V}_{radar}$ to estimate the ground speed of the aircraft in at least two flight orientations differing from one another by a change of heading and of attitude and in using these estimates to determine the speed drift $\vec{B}$ and a rotation matrix R corresponding to the errors of positioning of the radar with respect to the inertial unit, on the basis of the matrix relation:

$$\vec{V}_{unit} = R\vec{V}_{radar} + \vec{B}$$

applied for each of the flight orientations, the ground speed and ground speed drift vectors being expressed through their x, y and z components in a reference system related to the aircraft and the rotation matrix R being defined on the basis of the positioning error angles in terms of yaw $\varphi$, attitude $\theta$ and roll $\psi$ by the relation:

$$R = \begin{pmatrix} 1 & -\phi & -\theta \\ \phi & 1 & -\psi \\ \theta & \psi & 1 \end{pmatrix}$$

2. Method according to Claim 1, **characterized in that** it comprises the following steps:

- activation of the radar in ground speed determination mode and storage of the radar estimate $\vec{V}_{radar}$,
- storage of the value of the ground speed $\vec{V}_{unit}$ estimated by the inertial unit in synchronization with the radar,
- carrying out of a manoeuvre by the aircraft,
- new activation of the radar in ground speed determination mode and storage of the new pair of ground speed estimates $\vec{V}_{radar}$ and $\vec{V}_{unit}$ provided by the radar and the inertial unit, and
- determination of the errors of alignment between the radar and the inertial unit and of the ground speed drift $\vec{B}$ of the inertial unit by solving the system of linear equations arising from the twice-repeated implementation of the vector relation:

$$\vec{V}_{unit} = R\,\vec{V}_{radar} + \vec{B}$$

R being a rotation error matrix which characterizes the misalignment between the radar and the inertial unit, defined on the basis of the positioning error angles in terms of yaw $\varphi$, attitude $\theta$ and roll $\psi$ by the relation:

$$R = \begin{pmatrix} 1 & -\phi & -\theta \\ \phi & 1 & -\psi \\ \theta & \psi & 1 \end{pmatrix}$$

3. Method according to Claim 2, **characterized in that** it is implemented with several successive repetitions and **in that** an averaging is carried out of the various determinations obtained for each error of alignment of the radar with respect to the inertial unit and for the ground speed drift of the inertial unit in the course of the various repetitions.

4. Method according to Claim 2, **characterized in that** it is implemented with several successive repetitions and **in that** an averaging is carried out of the various determinations obtained for each error of alignment of the radar with respect to the inertial unit and for the ground speed drift of the inertial unit in the course of the various repetitions, weighted by the squares of their standard deviations.

FIG.1

FIG.2a

FIG.2b

FIG.3a

FIG.3b